(19)

Europäisches Patentamt

European Patent Office

Office européen des brevets

(11) EP 4 220 500 A1

(12) EUROPEAN PATENT APPLICATION

(43) Date of publication:
02.08.2023 Bulletin 2023/31

(21) Application number: 22208762.9

(22) Date of filing: 22.11.2022

(51) International Patent Classification (IPC):
G06N 20/00 (2019.01)      G06N 5/022 (2023.01)

(52) Cooperative Patent Classification (CPC):
G06N 20/00; G06N 5/022

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 26.01.2022 JP 2022010087

(71) Applicant: FUJITSU LIMITED
Kawasaki-shi, Kanagawa 211-8588 (JP)

(72) Inventors:
• PIAO, Bin
  Kawasaki-shi, Kanagawa, 211-8588 (JP)
• SHINGU, Masafumi
  Kawasaki-shi, Kanagawa, 211-8588 (JP)

(74) Representative: Hoffmann Eitle
Patent- und Rechtsanwälte PartmbB
Arabellastraße 30
81925 München (DE)

(54) **DATA MODIFICATION PROGRAM, DATA MODIFICATION METHOD, AND INFORMATION PROCESSING APPARATUS**

(57)    A data modification program executable by one or more computers, the data modification program includes: an instruction for specifying, from a plurality of attributes included in training data, a first attribute having a causal relation with a second attribute included in the plurality of attributes; and an instruction for modifying values of the first attribute in the training data in accordance with a condition for reducing a difference between distributions of the values of the first attribute corresponding to each value of the second attribute.

FIG.8

EP 4 220 500 A1

**Description**

TECHNICAL FIELD

The embodiment discussed herein is related to a data modification program, a data modification method and an information processing apparatus.

BACKGROUND ART

A machine learning model trained using passed data containing a bias may output an unfair inference result, e.g., an inference result which causes discrimination, for its characteristic of making statistically probable decisions. A bias is a deviation of a certain attributes such as gender.

In order to suppress discrimination caused by protected attributes such as gender, age, race, and nationality, a method is known for suppressing unfair inference made by a machine learning model by rewriting values of non-protected attributes except for protected attributes in data and thereby reducing the correlations between the protected attributes and the non-protected attributes. The "correlation" here may mean the relevance between attributes or the strength of the relevance.

PRIOR ART REFERENCE

PATENT DOCUMENT

[Patent Document 1] International Publication Pamphlet No. WO2021/084609
[Patent Document 2] International Publication Pamphlet No. WO2021/085188
[Patent Document 3] International Publication Pamphlet No. WO2021/005891

SUMMARY OF INVENTION

PROBLEMS TO BE SOLVED BY INVENTION

Since the above-described method does not use the exact causal relation (causal-effect relation) between a protected attribute and a non-protected attribute, data may be changed even for a non-protected attribute that accidentally has correlation with the protected attribute.

Further, the degree of rewriting of the values of a non-protected attribute is uniformly determined based on the specified (e.g., a single) parameter.

For the above, in the above-described method, data is changed even for a non-protected attribute that accidentally has correlation with the protected attribute, which may consequently degrade the accuracy of an inference result made by a machine learning model.

In one aspect, an object of the present disclosure is to suppress degradation in accuracy of an inference result by a machine learning model.

MEANS TO SOLVE THE PROBLEM

According to an aspect of the embodiments, a data modification program executable by one or more computer includes an instruction for specifying, from a plurality of attributes included in training data, a first attribute having a causal relation with a second attribute included in the plurality of attributes; and an instruction for modifying values of the first attribute in the training data in accordance with a condition for reducing a difference between distributions of the values of the first attribute corresponding to each value of the second attribute.

EFFECT OF INVENTION

As one aspect, the one embodiment can suppress the degradation in accuracy of an inferring result made by a machine learning model.

BRIEF DESCRIPTION OF DRAWINGS

FIG. 1 is a block diagram illustrating an example of the hardware (HW) configuration of a computer that achieves the function of a data modification apparatus according to one embodiment;

FIG. 2 is a block diagram schematically illustrating an example of the functional configuration of the data modification apparatus of the one embodiment;

FIG. 3 is a diagram illustrating an example of data;

FIG. 4 is a diagram illustrating an example of a reducing correlation by using a Disparate Impact Remover (DIR) ;

FIG. 5 is a diagram illustrating an example of a reduction ratio of correlation when a causal graph is not used;

FIG. 6 is a diagram illustrating an example of a causal graph;

FIG. 7 a diagram illustrating an example of a reduction ratio of correlation on the basis of a causal graph;

FIG. 8 is a flow diagram schematically illustrating an example of operation of the data modification apparatus of the one embodiment; and

FIG. 9 is a diagram illustrating an example of an inference result obtained with a machine learning model trained by modified data according to the one embodiment.

DESCRIPTION OF EMBODIMENT(S)

Hereinafter, an embodiment of the present invention will now be described with reference to the accompanying drawings. However, the embodiment described below is merely illustrative and is not intended to exclude the application of various modifications and techniques not explicitly described below. For example, the present embodiment can be variously modified and implemented without departing from the scope thereof. In the drawings to be used in the following description, the same reference numbers denote the same or similar parts, unless otherwise specified.

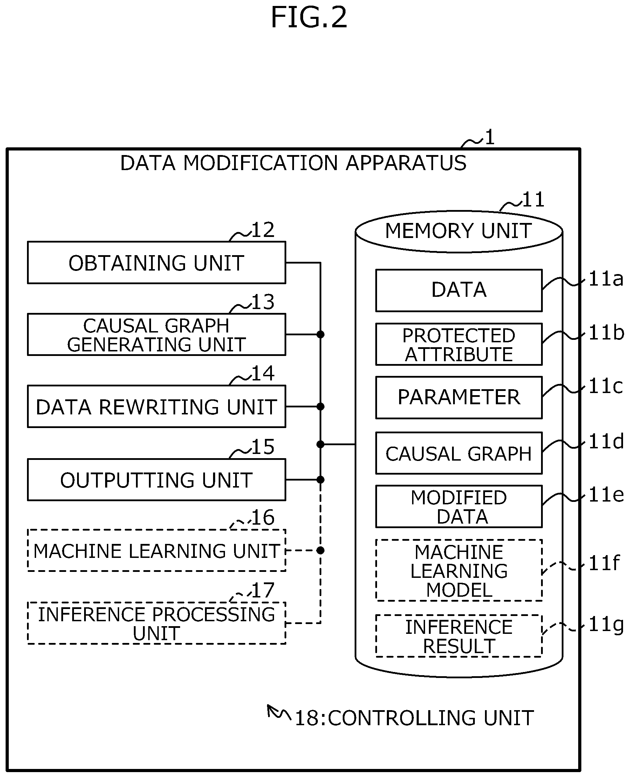

Hereinafter, description will now be made in relation to a data modification apparatus 1 (see FIG. 2) according to the one embodiment as a method for suppressing degradation in accuracy of an inference result by a machine learning model.

The data modification apparatus 1 according to the embodiment may be a virtual server (Virtual Machine (VM)) or a physical server. The functions of the data modification apparatus 1 may be achieved by one computer or by two or more computers. Further, at least some of the functions of the data modification apparatus 1 may be implemented using Hardware (HW) resources and Network (NW) resources provided by cloud environment.

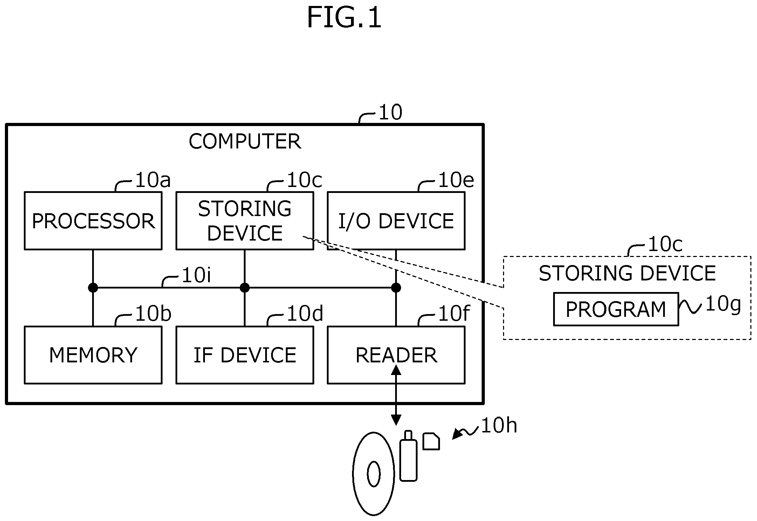

FIG. 1 is a block diagram illustrating an example of the hardware (HW) configuration of a computer 10 that achieves the functions of the data modification apparatus 1. If multiple computers are used as the HW resources for achieving the functions of the data modification apparatus 1, each of the computers may include the HW configuration illustrated in FIG. 1.

As illustrated in FIG. 1, the computer 10 may illustratively include a HW configuration formed of a processor 10a, a memory 10b, a storing device 10c, an IF (Interface) device 10d, an I/O (Input/Output) device 10e, and a reader 10f.

The processor 10a is an example of an arithmetic operation processing device that performs various controls and calculations. The processor 10a may be communicably connected to the blocks in the computer 10 via a bus 10i. The processor 10a may be a multiprocessor including multiple processors, may be a multicore processor having multiple processor cores, or may have a configuration having multiple multicore processors.

The processor 10a may be any one of integrated circuits (ICs) such as Central Processing Units (CPUs), Micro Processing Units (MPUs), Graphics Processing Units (GPUs), Accelerated Processing Units (APUs), Digital Signal Processors (DSPs), Application Specific ICs (ASICs) and Field Programmable Gate Arrays (FPGAs), or combinations of two or more of these ICs.

For example, when the data modification apparatus 1 executes a machine learning process in addition to a data modification process according to the one embodiment, the processor 10a may be a combination of a processing device such as a CPU that executes the data modification process and an accelerator that executes the machine learning process. Examples of the accelerator include the GPUs, APUs, DSPs, ASICs, and FPGAs described above.

The memory 10b is an example of a HW device that stores various types of data and information such as a program. Examples of the memory 10b include one or both of a volatile memory such as a Dynamic Random Access Memory (DRAM) and a non-volatile memory such as Persistent Memory (PM).

The storing device 10c is an example of a HW device that stores various types of data and information such as program. Examples of the storing device 10c include a magnetic disk device such as a Hard Disk Drive (HDD), a semiconductor drive device such as a Solid State Drive (SSD), and various storing devices such as a nonvolatile memory. Examples of the nonvolatile memory include a flash memory, a Storage Class Memory (SCM), and a Read Only Memory (ROM).

The storing device 10c may store a program 10g (data modification program) that implements all or part of various functions of the computer 10.

For example, the processor 10a of the data modification apparatus 1 can achieve the functions of the data modification apparatus 1 (for example, the controlling unit 18 illustrated in FIG. 2) described below by expanding the program 10g stored in the storing device 10c onto the memory 10b and executing the expanded program 10g.

The IF device 10d is an example of a communication IF that controls connection and communication among various networks including a network between the data modification apparatus 1 and a non-illustrated apparatus. An example of the non-illustrated apparatus is a computer such as a user terminal or a server that provides data to the data modification apparatus 1, or a computer such as a server that carries out a machine learning process based on data outputted from the data modification apparatus 1.

For example, the IF device 10d may include an applying adapter conforming to Local Area Network (LAN) such as Ethernet (registered trademark) or optical communication such as Fibre Channel (FC). The applying adapter may be compatible with one of or both wireless and wired communication schemes.

Furthermore, the program 10g may be downloaded from the network to the computer through the communication IF and be stored in the storing device 10c.

The I/O device 10e may include one or both of an input device and an output device. Examples of the input device include a keyboard, a mouse, and a touch panel. Examples of the output device include a monitor, a projector, and a printer. Alternatively, the I/O device 10e may include, for example, a touch panel that integrates an input device with the output device.

The reader 10f is an example of a reader that reads data and programs recorded on a recording medium 10h. The reader 10f may include a connecting terminal or device to which the recording medium 10h can be connected or inserted. Examples of the reader 10f include an applying adapter conforming to, for example, Universal Serial Bus (USB), a drive apparatus that accesses a recording disk, and a card reader that accesses a flash memory such as an SD card. The program 10g may be stored in the recording medium 10h. The reader 10f may read the program 10g from the recording medium 10h and store the read program 10g into the storing device 10c.

The recording medium 10h is an example of a non-transitory computer-readable recording medium such as a magnetic/optical disk, and a flash memory. Examples of the magnetic/optical disk include a flexible disk, a Compact Disc (CD), a Digital Versatile Disc (DVD), a Blu-ray disk, and a Holographic Versatile Disc (HVD). Examples of the flash memory include a semiconductor memory such as a USB memory and an SD card.

The HW configuration of the computer 10 described above is exemplary. Accordingly, the computer 10 may appropriately undergo increase or decrease of HW devices (e.g., addition or deletion of arbitrary blocks), division, integration in an arbitrary combination, and addition or deletion of the bus.

FIG. 2 is a block diagram schematically illustrating an example of the functional configuration of the data modification apparatus 1 of the one embodiment. The data modification apparatus 1 is an exemplary information processing apparatus or computer that modifies data used to train a machine learning model. For example, the data modification apparatus 1 may modify data used to train a machine learning model by employing a method to suppress an unfair inference by a machine learning model.

The one embodiment may use a technique of a Disparate Impact Remover (DIR) as an exemplary method. The data modification apparatus 1 of the one embodiment suppresses the degradation in accuracy of an inference result caused by application of the DIR by, for example, individually changing a parameter used when rewriting values of a non-protected attribute for each attribute.

As illustrated in FIG. 2, the data modification apparatus 1 may illustratively include a memory unit 11, an obtaining unit 12, a causal graph generating unit 13, a data rewriting unit 14, and an outputting unit 15. The data modification apparatus 1 may include a machine learning unit 16, and may further include an inference processing unit 17. The obtaining unit 12, the causal graph generating unit 13, the data rewriting unit 14, the outputting unit 15 (and the machine learning unit 16 and the inference processing unit 17) are examples of a controlling unit 18.

The memory unit 11 is an example of a storing region and stores various data used by the data modification apparatus 1. The memory unit 11 may be achieved by, for example, a storing region that one or both of the memory 10b and the storing device 10c illustrated in FIG. 1.

As illustrated in FIG. 2, the memory unit 11 may illustratively be capable of storing data 11a, a protected attribute 11b, a parameter 11c, a causal graph 11d, and modified data 11e. In addition, if the data modification apparatus 1 includes the machine learning unit 16, the memory unit 11 may be capable of storing a machine learning model 11f. Further, if the data modification apparatus 1 includes the inference processing unit 17, the memory unit 11 may be capable of storing an inference result 11g.

Hereinafter, for the sake of convenience, the information that the memory unit 11 stores is expressed in a table format, but the form of the information is not limited to this. At least one type of the information that the memory unit 11 stores may be in various formats such as a database (Database: DB) or an array.

The obtaining unit 12 obtains various types of information used in the data modification apparatus 1. For example, the obtaining unit 12 may obtain the data 11a, the protected attribute 11b, and the parameter 11c from a device (not illustrated) that provides data, and store them into the memory unit 11.

The data 11a is data containing multiple attributes, and is an example of training data used to train a machine learning model. Each of the multiple attributes may be a protected attribute or a non-protected attribute.

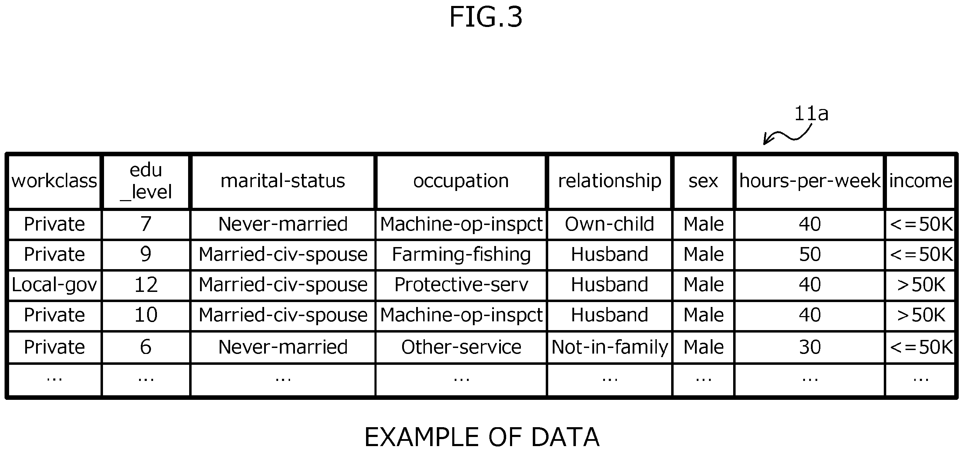

FIG. 3 is a diagram illustrating an example of data 11a. As illustrated in FIG. 3, the one embodiment assumes that the data 11a is adult data. Adult data is public data prepared on the basis of census data in the United States, and is data representing adult income. In the following description, it is assumed that the data 11a is used in a machine learning process for achieving a predetermined Artificial Intelligence (AI) task such as income prediction (prediction of whether "income" is ">=50k").

The protected attribute 11b is information for specifying (e.g., assigning) a second attribute among multiple attributes included in the data 11a. For example, the protected attribute 11b may include at least one of gender, age, race, nationality, and the like. In the example of FIG. 3, "sex", which represents gender, is one of the protected attributes 11b.

The parameter 11c is information used when the values of a non-protected attribute except for the protected attribute 11b included in the data 11a are rewritten, and indicates the degree of rewriting the values of the non-protected attribute. For example, the parameter 11c may be one or more values. A non-protected attribute 11b is an example of a first attribute among multiple attributes included in the data 11a.

The parameter 11c may be, for example, similar to a parameter used to reduce correlation between a protected attribute and a non-protected attribute in a method for suppressing unfair inference made by a machine learning model. In one embodiment, the parameter 11c is an example of an initial value for modifying the values of a non-protected attribute.

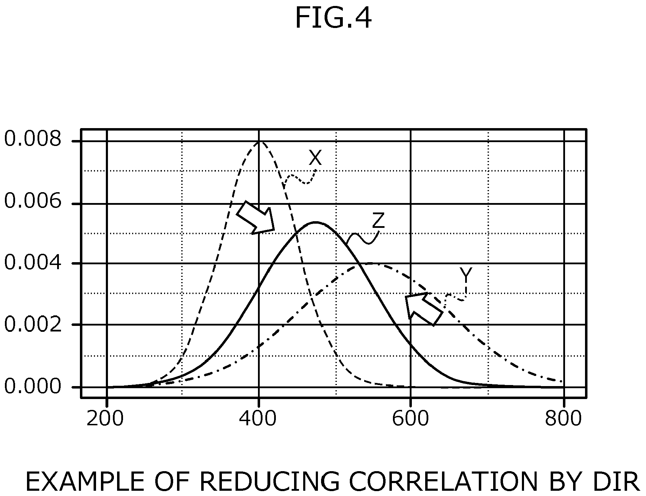

FIG. 4 is a diagram illustrating an example of reducing correlation by using a Disparate Impact Remover (DIR). The horizontal axis of FIG. 4 indicates a value of a non-protected attribute, and the vertical axis indicates a probability distribution. The reference signs X (dashed line) and Y (dashed-dotted line) illustrated in FIG. 4 are probability density functions of a non-protected attribute for each value (e.g., gender: "male" and "female") of a protected attribute 11b. Since the graphs represented by the reference signs X and Y indicates that distributions of the values of the non-protected attribute are deviated in accordance with the values of the protected attribute 11b, it can be said that the non-protected attribute has correlation with the protected attribute 11b.

The probability density function indicated by the reference sign Z (solid line) is a graph when the values of a non-protected attribute is uniformly rewritten using a single parameter 11c in a process using a normal DIR. The probability density function indicated by the reference sign Z is a function in which the correlation between a protected attribute 11b and a non-protected attribute are reduced as compared with the probability density functions indicated by the reference sign X and the reference sign Y.

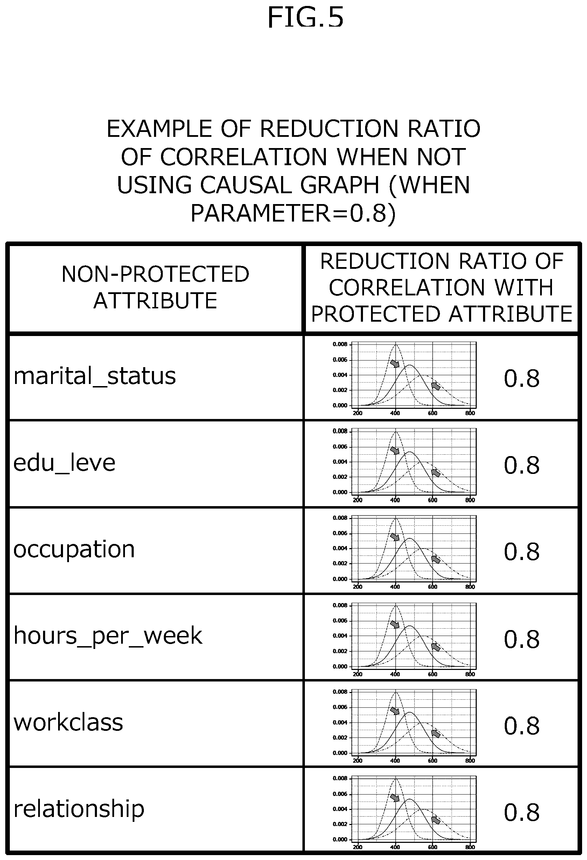

FIG. 5 is a diagram illustrating an example of a reduction ratio of correlation when a causal graph is not used. FIG. 5 illustrates a case where a normal DIR is used as a case where a causal relation is not used. In FIG. 5, the parameter 11c is assumed to be "0.8".

As illustrated in FIG. 5, when a non-protected attribute is modified on the basis of a single parameter 11c in the DIR, the correlation between each non-protected attribute and the protected attribute 11b is reduced at a uniform ratio. In this case, as described above, data may be changed for a non-protected attribute which has accidentally correlation with the protected attribute 11b, so that the accuracy in the inference result by a machine learning model trained with the data in question may be degraded.

As a solution to the above, the data modification apparatus 1 according to the one embodiment modifies the values of each non-protected attribute on the basis of the causal relation between the protected attribute 11b and the non-protected attribute that are correlated with each other. Accordingly, it is possible to suppress degradation in accuracy of an inference result by the machine learning model 11f trained with the data 11a (modified data 11e described below) including the modified values.

The causal relation between the protected attribute 11b and the non-protected attribute may mean a relationship between the cause and the result between these attributes. For example, having a casual relation may mean that the value of one attribute (the result) is caused by the value of the other attribute (the cause). In addition, the strength of the causal relation may mean one or the both of a possibility that these attributes have a causal relation and a degree of contribution of the value of one attribute to the other attribute. The strength of the causal relation may be referred to as the extent or the degree of the causal relation.

The causal graph generating unit 13 generates a causal graph (causal-effect graph) 11d, using the protected attribute 11b in the data 11a as an explanatory variable and the class to be classified as the response variable.

As an example, the causal graph generating unit 13 may execute causal estimation that estimates a matrix A representing causal relations between attributes included in the data 11a, using a trained machine learning model (not illustrated) for performing a causal search.

The causal graph 11d may be expressed, for example based on the matrix A estimated by the causal estimation. For example, the causal graph generating unit 13 may store the estimated matrix A, as the causal graph 11d, into the memory unit 11.

An example of a trained machine learning model for performing a causal search is a Linear Non-Gaussian Acyclic Model (LiNGAM). The causal estimation using a LiNGAM is formulated by the following Equations (1) to (3).

$$x = Ax + \varepsilon \qquad (1)$$

$$x = (x_1, x_2, \ldots, x_n)^T \qquad (2)$$

$$\varepsilon = (\varepsilon_1, \varepsilon_2, \ldots, \varepsilon_n)^T \qquad (3)$$

In Equations (2) and (3), the symbol "n" denotes the number of attributes (the attribute number ) included in the data 11a. As an example, "n=11" is assumed to be satisfied. In the above Equation (2), "$x_i$" (where, i is an integer between "1" and "n" both inclusive) indicates each attributes included in the data 11a. In the above Equation (3), the "$\varepsilon_i$" denotes the noise of the non-Gaussian distribution.

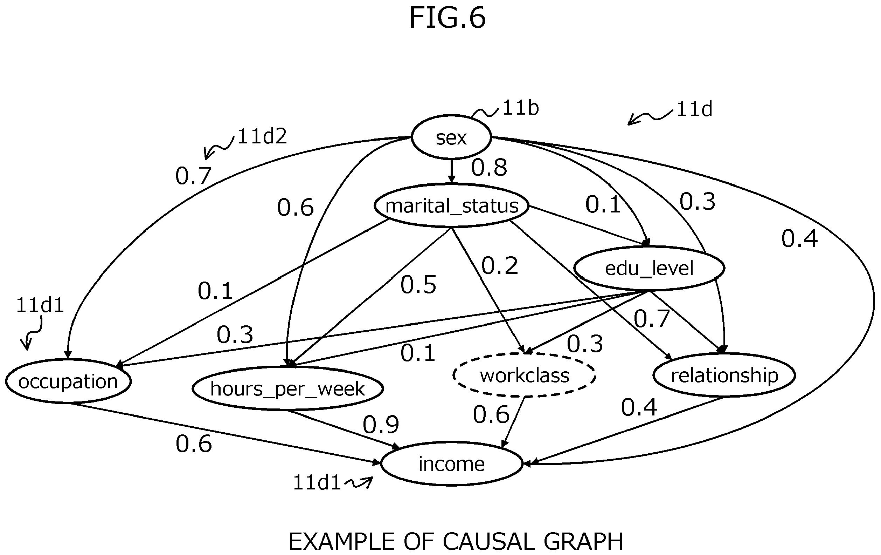

FIG. 6 is a diagram illustrating an example of a causal graph 11d. The causal graph 11d is information in which the protected attribute 11b and non-protected attribute 11d1 are regarded as nodes, and an index 11d2, which indicates the strength of the causal relation between attributes, is associated with an edge (side) that connects the nodes (attributes). The causal graph 11d may be illustrated as a directed graph as exemplified in FIG. 6 and, in other instances, may be illustrated as the matrix A as described above.

In LiNGAM, an extrinsic variable and the response variable can be set in advance. The extrinsic variable corresponds to the root node of the causal graph 11d, and in the example of FIG. 6, is a protected attribute 11b "sex". The response variable is a variable of which a causal relation with an extrinsic variable is to be estimated, and corresponds to a node at the end of the causal graph 11d. In the example of FIG. 6, the response variable is the "income" among the non-protected attributes 11d1.

The causal graph generating unit 13 may calculate the index 11d2 indicating the strength of the causal relation between the protected attribute 11b and each non-protected attribute 11d1 included in the data 11a on the basis of the data 11a and the protected attribute 11b, using the above Equations (1) to (3).

In the example of FIG. 6, the index 11d2 is illustrated on an edge connecting nodes. For example, the index 11d2 between "sex" and "edu_level" is "0.1".

The data rewriting unit 14 adjusts the ratio of the parameter 11c to be applied to each non-protected attribute 11d1 on the basis of the causal graph 11d. The data rewriting unit 14 rewrites the values of the non-protected attribute 11d1 included in the data 11a at the adjusted ratio, and stores data 11a after the rewriting of the values into the memory unit 11 as modified data 11e.

This allows the data rewriting unit 14 to modify the values of the respective non-protected attributes 11d1, using an appropriate ratio depending on the causal relation between each non-protected attribute 11d1 and the protected attribute 11b. An exemplary process performed by the data rewriting unit 14 will now be described below.

For example, the data rewriting unit 14, based on the causal graph 11d, specifies, from the multiple attributes included in data 11a, a non-protected attribute 11d1 (hereinafter sometimes referred to as "modification-target non-protected attribute 11d1") that has a causal relation with the protected attribute 11b among the multiple attributes.

A modification-target non-protected attribute 11d1 may be, for example, a non-protected attribute 11d1 for which an index 11d2 is set (calculated) with respect to the protected attribute 11b in the causal graph 11d.

In the example of FIG. 6, the modification-target non-protected attributes 11d are "marital-status", "edu_level", "occupation", "relationship", "hours-per-week", and "income".

On the other hand, no edge exists between the protected attribute 11b "sex" and the non-protected attribute 11d1 "workclass" (, which means these attributes are not directly connected). The absence of an edge means that the protected attribute "sex" may have correlation with the non-protected attribute "workclass", but have no causal relation with "workclass". In this case, "workclass" (the fourth attribute) is a non-protected attribute 11d1 that is not to be modified.

Alternatively, a non-protected attribute 11d1 having, among the non-protected attributes 11d1 each for which index 11d2 is set in the causal graph 11d, a causal relation with the protected attribute 11b may be limited to a non-protected attribute 11d1 having index 11d2 equal to or larger than a given threshold value. In other words, the data rewriting unit 14 may determine a non-protected attribute 11d1 having an index 11d2 less than the given threshold value to be a non-protected attribute 11d1 not to be modified among non-protected attributes 11d1 each for which the index 11d2 are set in the causal graph 11d.

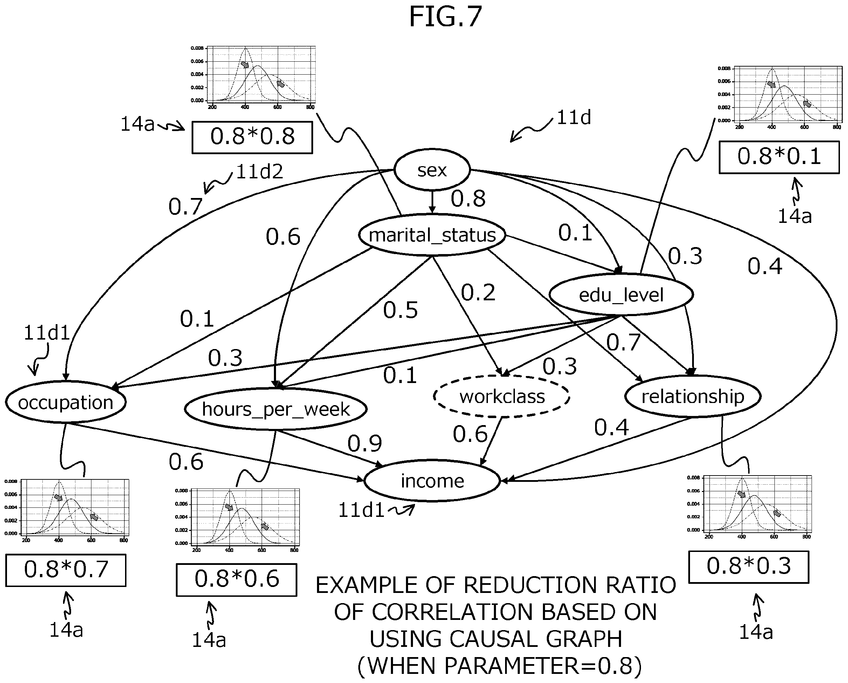

FIG. 7 is a diagram illustrating an example of the reduction ratio 14a of correlation on the basis of the causal graph 11d. In FIG. 7, the parameter 11c is assumed to be "0.8". As illustrated in FIG. 7, the data rewriting unit 14 calculates a reduction ratio 14a to be applied to the values of a non-protected attribute 11d1 on the basis of the parameter 11c and the index 11d2 set between the non-protected attribute 11d1 and the protected attribute 11b for each modification-target non-protected attribute 11d1.

A reduction ratio 14a may be a product of the parameter 11c and the index 11d2. Alternatively, the reduction ratio 14a may be a result of any calculation using the parameter 11c and the index 11d2.

In the example of FIG. 7, the data rewriting unit 14 calculates the reduction ratio 14a of the non-protected attribute 11d1 "edu_level" to be "0.8 × 0.1 = 0.08", which is the multiplication result of the parameter 11c "0.8" and the index 11d2 "0.1" between the non-protected attribute 11d1 "edu_level" and the protected attribute 11b "sex".

The data rewriting unit 14 modifies values of multiple non-protected attributes 11d1 included in the data 11a, using the reduction ratios 14a calculated for the respective non-protected attributes 11d1, and stores the data 11a after the modification as the modified data 11e into the memory unit 11. Each of the non-protected attributes 11d1 is an example of a third attribute.

The data rewriting unit 14 may modify the values of a non-protected attribute 11d1 in the data 11a, for example, according to a condition for reducing differences in the probability distributions of the values of the non-protected attribute 11d1, the probability distributions being one for each value of the protected attribute 11b. In other words, the data rewriting unit 14 may modify values of the non-protected attribute 11d1 in the training data in accordance with a condition for reducing a difference between distributions of the values of the non-protected attribute 11d1 corresponding to each value of the protected attribute 11b.

The condition is, for example, a condition that the values of a non-protected attribute 11d1 having a stronger causal relation with the protected attribute 11b are reduced at a higher degree, or a condition that the values of a non-protected attribute 11d1 having a weaker causal relation with the protected attribute 11b are reduced at a lower degree. In other words, for example, the condition includes a condition that more intensively reduces a difference between distributions of values of a non-protected attribute 11d1 (third attribute), the non-protected attribute 11d1 having a stronger causal relation with the protected attribute 11b than the causal relation between a non-protected attribute 11d1 (first attribute) and the protected attribute 11b (second attribute).

For example, in FIG. 7, the non-protected attribute 11d1 "Marital_status" having an index 11d2 of "0.8" has a stronger causal relation with the protected attribute 11b than the non-protected attribute 11d1 "edu_level" having an index 11d2 of "0.1". In this case, the data rewriting unit 14 may modify (e.g., by reducing) the values of "Marital_status" at a larger degree than the values of "edu_level".

For example, the data rewriting unit 14 may use a result of multiplying the value of a non-protected attribute 11d1 and a value of "1-(calculated reduction ratio)" as the value (the modified value) after the modification of the non-protected attribute 11d1. The manner of modifying the data 11a using reduction ratio 14a is not limited to the above-described example, and various manners may be adopted in accordance with a manner of calculating the reduction ratio 14a.

The outputting unit 15 outputs the output data. An example of the output data is the modified data 11e. In addition to the modified data 11e, the output data may include one or both of a machine learning model 11f and an inference result 11g that are to be described below.

In the "outputting" of the output data, the outputting unit 15 may transmit (provide) the output data to another non-illustrated computer, or may store the output data in memory unit 11 to manage the output data to be obtainable from the data modification apparatus 1 or another computer. Alternatively, in the "outputting" of the output data, the outputting unit 15 may output the information indicating the output data on the screen of an output device, for example, the data modification apparatus 1, or may alternatively output the output data in various other manners.

As described above, the data modification apparatus 1 may include a machine learning unit 16, and may further include an inference processing unit 17.

In a machine learning phase, the machine learning unit 16 executes a machine learning process that trains the machine learning model 11f on the basis of the modified data 11e including the values of the non-protected attribute 11d1 modified using the reduction ratio 14a. The machine learning model 11f may be a Neural Network (NN) model that includes parameters having been subjected to machine learning. The machine learning process may be implemented by various known techniques.

In the inferring phase, the inference processing unit 17 carries out an inference process using the machine learning model 11f trained on the basis of the modified data 11e.

For example, the inference processing unit 17 inputs target data (not illustrated) of the inference process into the machine learning model 11f, and stores an inference result 11g outputted from the machine learning model 11f into the memory unit 11.

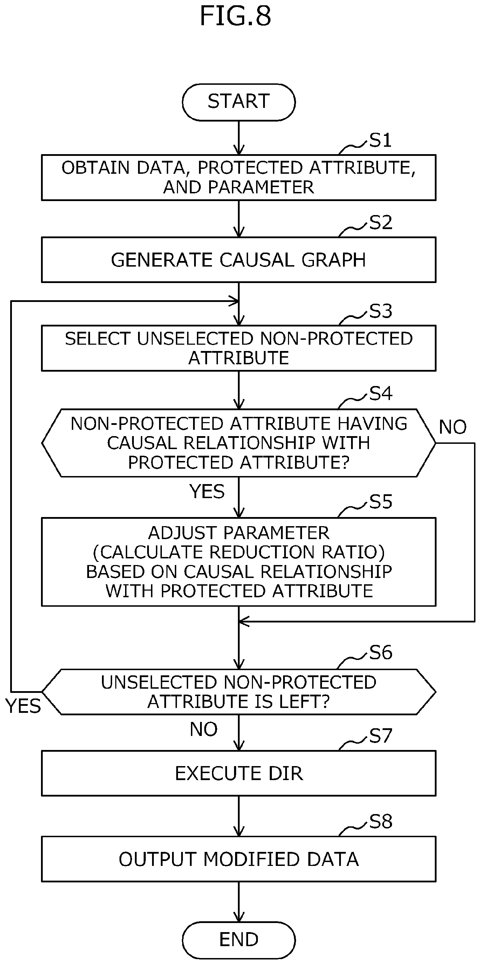

Next description will now be made in relation to an example of operation of the data modification apparatus 1 of the one embodiment. FIG. 8 is a flow diagram schematically illustrating an example of operation of the data modification apparatus 1 of the one embodiment.

As illustrated in FIG. 8, the obtaining unit 12 of the data modification apparatus 1 obtains the data 11a, the protected attribute 11b, and the parameter 11c (Step S1), and stores them into the memory unit 11.

The causal graph generating unit 13 generates a causal graph 11d based on the data 11a and the protected attribute 11b (Step S2), and stores the causal graph into the memory unit 11.

The data rewriting unit 14 selects an unselected non-protected attribute 11d1 among the non-protected attributes 11d1 in the data 11a (Step S3).

The data rewriting unit 14 determines whether or not the selected non-protected attribute 11d1 is a non-protected attribute 11d1 having a causal relation with the protected attribute 11b on the basis of the causal graph 11d (Step S4). For example, the data rewriting unit 14 may determine whether or not an index 11d2 exists between the selected non-protected attribute 11d1 and the protected attribute 11b (or whether or not the index 11d2 is equal to or larger than a given threshold) on the basis of the causal graph 11d.

If the selected non-protected attribute (third attribute) 11d1 is determined to have a causal relation with the protected attribute 11b (YES in Step S4), the process proceeds to Step S5. On the other hand, if the selected non-protected attribute 11d1 is determined not to have a causal relation with a protected attribute 11b (NO in Step S4), the process proceeds to Step S6.

In Step S5, the data rewriting unit 14 adjusts the parameter 11c on the basis of the causal relation between the selected non-protected attribute 11d1 and the protected attribute 11b, and then the process proceeds to Step S6. As an example, the data rewriting unit 14 may calculate the reduction ratio 14a based on the index 11d2, which indicates the strength of the causal relation between the selected non-protected attribute 11d1 and protected attribute 11b, and parameter 11c.

In Step S6, the data rewriting unit 14 determines whether or not an unselected non-protected attribute 11d1 is left among the non-protected attributes 11d1 in data 11a.

If an unselected non-protected attribute 11d1 is determined to be left (YES in Step S6), the process proceeds to Step S3.

If an unselected non-protected attribute 11d1 is determined not to be left (NO in Step S6), the data rewriting unit 14 executes a DIR for modifying values of each non-protected attribute 11d1 included in the data 11a on the basis of the reduction ratio 14a calculated in Step S5 (Step S7).

The outputting unit 15 outputs the modified data 11e generated by the data rewriting unit 14 executing the DIR (Step S8), and the process ends.

In data modification apparatus 1 according to an embodiment, the controlling unit 18 specifies, from the multiple attributes included in, a non-protected attribute 11d1 that has a causal relation with the protected attribute 11b among the multiple attributes. In addition, the controlling unit 18 modifies the values of the non-protected attribute 11d1 of the data 11a, for example, according to a condition for reducing differences in the probability distribution of the values of the non-protected attribute 11d1 for each value of the protected attributes 11b.

As the above, according to the data modification apparatus 1, the values of a non-protected attribute 11d1 having a causal relation with the protected attribute 11b can be modified. This can suppress the modification of the value of a non-protected attribute 11d1 which (e.g., accidentally) has correlation with the protected attribute 11b but which has no causal relation with the protected attribute 11b.

Further, according to the data modification apparatus 1, the value of a non-protected attribute 11d1 can be modified to an appropriate value according to the condition. For example, in reducing the correlation between the protected attribute 11b and a non-protected attribute 11d1, the data modification apparatus 1 can adjust the amount of reduction in the correlation in accordance with the strength of the causal relation between the protected attribute 11b and the non-protected attribute 11d1 in question. Consequently, as compared with a case where multiple non-protected attributes 11d1 are uniformly modified on the basis of the parameter 11c, it is possible to suppress degradation of the accuracy of the inference result caused by machine learning model 11f trained with the modified data 11e.

As described above, according to the data modification apparatus 1 of the one embodiment, it is possible to appropriately adjust (e.g., set to a minimum) a range and a degree of modification of the data 11a, and to generate modified data 11e in which biases such as discrimination are mitigated.

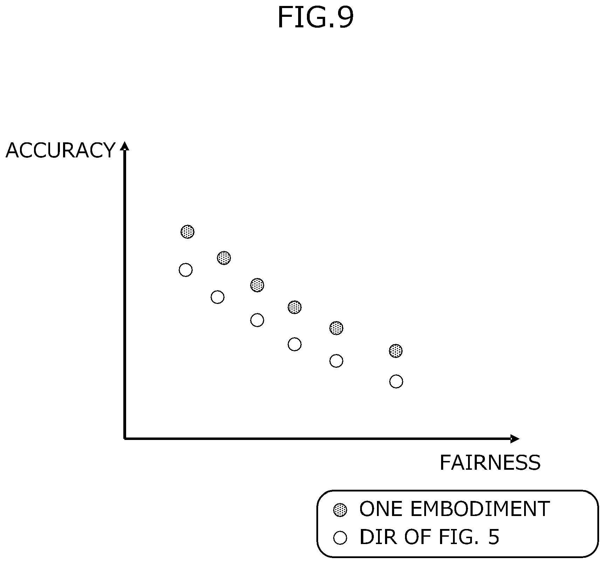

FIG. 9 is a diagram illustrating an example of an inference result obtained with a machine learning model 11f trained by modified data 11e according to the one embodiment. The horizontal axis of FIG. 9 indicates the fairness, and the vertical axis indicates the accuracy. The shaded circles are plots of an example of an inference result obtained with the machine learning model 11f. The white circles are plots of an inference result obtained with a machine learning model trained with the data generated by a normal DIR (DIR using the parameter 11c illustrated in FIG. 5) serving as a comparative example.

According to the method of the one embodiment, as illustrated by the shaded circles, it is possible to suppress the degradation of the accuracy of an inference result (or to improve the accuracy) while ensuring the fairness of the inference result as compared with the white circles.

The technique according to the one embodiment described above can be implemented by changing or modifying as follows.

For example, the obtaining unit 12, the causal graph generating unit 13, the data rewriting unit 14 and the outputting unit 15 (and the machine learning unit 16 and the inference processing unit 17) included in the data modification apparatus 1 illustrated in FIG. 2 may be merged at any combination, or may each be divided.

In addition, the data modification apparatus 1 illustrated in FIG. 2 may have a configuration (system) that achieves each processing function by multiple apparatuses cooperating with each other via a network. As an example, the memory unit 11 may be a DB server; the obtaining unit 12 and the outputting unit 15 may be a Web server or an application server; the causal graph generating unit 13, the data rewriting unit 14, the machine learning unit 16, and the inference processing unit 17 may be an application server. In this case, the processing function as the data modification apparatus 1 may be achieved by the DB server, the application server, and the web server cooperating with one another via a network.

The one embodiment assumes that one (gender "sex") among the multiple attributes included in the data 11a is the protected attribute 11b, but the number of protected attributes 11b is not limited to one. Alternatively, the data may include multiple protected attributes 11b.

Here, the data modification apparatus 1 may generate a causal graph 11d for each protected attribute 11b.

Furthermore, the data modification apparatus 1 may generate the modified data 11e for each protected attribute 11b. Alternatively, the data modification apparatus 1 may generate one set of the modified data 11e related to two or more protected attributes 11b by combining (e.g., multiplying) the respective reduction ratios 14a of the two or more protected attributes 11b for each non-protected attribute 11d1.

DESCRIPTION OF REFERENCE SIGN

| | |
|---|---|
| 1 | data modification apparatus |
| 11 | memory unit |
| 11a | data |
| 11b | protected attribute |
| 11c | parameter |
| 11d | causal graph |
| 11d1 | non-protected attribute |
| 11d2 | index |
| 11e | modified data |
| 11f | machine learning model |
| 11g | inference result |
| 12 | obtaining unit |
| 13 | causal graph generating unit |
| 14 | data rewriting unit |
| 14a | reduction ratio |
| 15 | outputting unit |
| 16 | machine learning unit |
| 17 | inference processing unit |
| 18 | controlling unit |

**Claims**

1. A data modification program executable by one or more computers, the data modification program comprising:

   an instruction for specifying, from a plurality of attributes included in training data, a first attribute having a causal relation with a second attribute included in the plurality of attributes;
   an instruction for modifying values of the first attribute in the training data in accordance with a condition for reducing a difference between distributions of the values of the first attribute corresponding to each value of the second attribute.

2. The data modification program according to claim 1, wherein

   the condition includes a condition that more intensively reduces a difference between distributions of values of a third attribute, the third attribute having a stronger causal relation with the second attribute than the causal relation between the first attribute and the second attribute, and

the modifying comprises reducing the difference between distributions of values of the third attribute in accordance with the condition.

3. The data modification program according to claim 2, wherein

   the data modification program further comprises an instruction for calculating an index representing strength of the causal relation between the first attribute and the second attribute, the index being based on the training data and an initial value of the modifying, and
   the modifying comprises reducing the values of the first attribute serving as the third attribute in accordance with a reduction ratio based on the initial values and the index.

4. The data modification program according to any one of claims 1-3, wherein
   the data modification program further comprises an instruction for suppressing modification of values of a fourth attribute included in the plurality of attributes included in the training data, the fourth attribute being correlated with the second attribute, and the fourth attribute having no causal relation with the second attribute.

5. The data modification program according to any one of claims 1-4, wherein the second attribute is a protected attribute.

6. A data modification method comprising:

   specifying, from a plurality of attributes included in training data, a first attribute having a causal relation with a second attribute included in the plurality of attributes;
   modifying values of the first attribute in the training data in accordance with a condition for reducing a difference between distributions of the values of the first attribute corresponding to each value of the second attribute.

7. The data modification method according to claim 6, wherein

   the condition includes a condition that more intensively reduces a difference between distributions of values of a third attribute, the third attribute having a stronger causal relation with the second attribute than the causal relation between the first attribute and the second attribute, and
   the modifying comprises reducing the difference between distributions of values of the third attribute in accordance with the condition.

8. The data modification method according to claim 7, wherein

   the data modification method further comprises calculating an index representing strength of the causal relation between the first attribute and the second attribute, the index being based on the training data and an initial value of the modifying, and
   the modifying comprises reducing the values of the first attribute serving as the third attribute in accordance with a reduction ratio based on the initial values and the index.

9. The data modification method according to any one of claims 6-8, wherein
   the data modification method further comprises suppressing modification of values of a fourth attribute included in the plurality of attributes included in the training data, the fourth attribute being correlated with the second attribute, and the fourth attribute having no causal relation with the second attribute.

10. The data modification method according to any one of claims 6-9, wherein the second attribute is a protected attribute.

11. An information processing apparatus comprising:
    a controlling unit that

    performs specification of, from a plurality of attributes included in training data, a first attribute having a causal relation with a second attribute included in the plurality of attributes, and
    performs modification of values of the first attribute in the training data in accordance with a condition for reducing a difference between distributions of the values of the first attribute corresponding to each value of the second attribute.

12. The information processing apparatus according to claim 11, wherein

the condition includes a condition that more intensively reduces a difference between distributions of values of a third attribute, the third attribute having a stronger causal relation with the second attribute than the causal relation between the first attribute and the second attribute, and

the modification comprises reduction of the difference between distributions of values of the third attribute in accordance with the condition.

13. The information processing apparatus according to claim 12, wherein

the controlling unit further performs calculation of an index representing strength of the causal relation between the first attribute and the second attribute, the index being based on the training data and an initial value of the modifying, and

the modification comprises reducing of the values of the first attribute serving as the third attribute in accordance with a reduction ratio based on the initial value and the index.

14. The information processing apparatus according to any one of claims 11-13, wherein the controlling unit further performs suppressing of modification of values of a fourth attribute included in the plurality of attributes included in the training data, the fourth attribute being correlated with the second attribute, and the fourth attribute having no causal relation with the second attribute.

15. The information processing apparatus according to any one of claims 11-14, wherein the second attribute is a protected attribute.

# FIG.1

COMPUTER — 10

PROCESSOR — 10a
STORING DEVICE — 10c
I/O DEVICE — 10e

— 10i

MEMORY — 10b
IF DEVICE — 10d
READER — 10f

STORING DEVICE — 10c
PROGRAM — 10g

— 10h

# FIG.2

DATA MODIFICATION APPARATUS ~1

OBTAINING UNIT ~12

CAUSAL GRAPH GENERATING UNIT ~13

DATA REWRITING UNIT ~14

OUTPUTTING UNIT ~15

MACHINE LEARNING UNIT ~16

INFERENCE PROCESSING UNIT ~17

MEMORY UNIT ~11

DATA — 11a

PROTECTED ATTRIBUTE — 11b

PARAMETER — 11c

CAUSAL GRAPH — 11d

MODIFIED DATA — 11e

MACHINE LEARNING MODEL — 11f

INFERENCE RESULT — 11g

18:CONTROLLING UNIT

# FIG.3

EP 4 220 500 A1

| workclass | edu _level | marital-status | occupation | relationship | sex | hours-per-week | income |
|---|---|---|---|---|---|---|---|
| Private | 7 | Never-married | Machine-op-inspct | Own-child | Male | 40 | <=50K |
| Private | 9 | Married-civ-spouse | Farming-fishing | Husband | Male | 50 | <=50K |
| Local-gov | 12 | Married-civ-spouse | Protective-serv | Husband | Male | 40 | >50K |
| Private | 10 | Married-civ-spouse | Machine-op-inspct | Husband | Male | 40 | >50K |
| Private | 6 | Never-married | Other-service | Not-in-family | Male | 30 | <=50K |
| ... | ... | ... | ... | ... | ... | ... | ... |

11a

EXAMPLE OF DATA

## FIG.4

EXAMPLE OF REDUCING CORRELATION BY DIR

EP 4 220 500 A1

# FIG.5

EXAMPLE OF REDUCTION RATIO
OF CORRELATION WHEN NOT
USING CAUSAL GRAPH (WHEN
PARAMETER=0.8)

| NON-PROTECTED ATTRIBUTE | REDUCTION RATIO OF CORRELATION WITH PROTECTED ATTRIBUTE | |
|---|---|---|
| marital_status | | 0.8 |
| edu_leve | | 0.8 |
| occupation | | 0.8 |
| hours_per_week | | 0.8 |
| workclass | | 0.8 |
| relationship | | 0.8 |

# FIG.6

EXAMPLE OF CAUSAL GRAPH

# FIG.7

EXAMPLE OF REDUCTION RATIO
OF CORRELATION BASED ON
USING CAUSAL GRAPH
(WHEN PARAMETER=0.8)

EP 4 220 500 A1

# FIG.8

```
                    ┌─────────┐
                    │  START  │
                    └────┬────┘
                         │              ~S1
          ┌──────────────▼──────────────────┐
          │  OBTAIN DATA, PROTECTED ATTRIBUTE,│
          │         AND PARAMETER             │
          └──────────────┬──────────────────┘
                         │              ~S2
          ┌──────────────▼──────────────────┐
          │     GENERATE CAUSAL GRAPH        │
          └──────────────┬──────────────────┘
                         │              ~S3
          ┌──────────────▼──────────────────┐
          │  SELECT UNSELECTED NON-PROTECTED │
          │           ATTRIBUTE              │
          └──────────────┬──────────────────┘
                         │              ~S4
           ╱─────────────▼────────────────╲   NO
          ⟨ NON-PROTECTED ATTRIBUTE HAVING ⟩────┐
          ⟨   CAUSAL RELATIONSHIP WITH     ⟩    │
           ╲   PROTECTED ATTRIBUTE?        ╱    │
                      YES │                     │
                         │              ~S5     │
          ┌──────────────▼──────────────────┐   │
          │       ADJUST PARAMETER          │   │
          │   (CALCULATE REDUCTION RATIO)   │   │
          │  BASED ON CAUSAL RELATIONSHIP   │   │
          │    WITH PROTECTED ATTRIBUTE     │   │
          └──────────────┬──────────────────┘   │
                         │◄────────────────────┘
                         │              ~S6
           ╱─────────────▼────────────────╲
     YES  ⟨  UNSELECTED NON-PROTECTED     ⟩
    ◄─────⟨    ATTRIBUTE IS LEFT?         ⟩
           ╲──────────────────────────────╱
                      NO │
                         │              ~S7
          ┌──────────────▼──────────────────┐
          │         EXECUTE DIR             │
          └──────────────┬──────────────────┘
                         │              ~S8
          ┌──────────────▼──────────────────┐
          │     OUTPUT MODIFIED DATA        │
          └──────────────┬──────────────────┘
                         │
                    ┌────▼────┐
                    │   END   │
                    └─────────┘
```

# FIG.9

ACCURACY

FAIRNESS

⊛ ONE EMBODIMENT
○ DIR OF FIG. 5

## EUROPEAN SEARCH REPORT

Application Number

EP 22 20 8762

Europäisches
Patentamt
European
Patent Office
Office européen
des brevets

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | FELDMAN MICHAEL MFELDMAN@HAVERFORD EDU ET AL: "Certifying and Removing Disparate Impact", HOT TOPICS IN MIDDLEBOXES AND NETWORK FUNCTION VIRTUALIZATION, ACM, 2 PENN PLAZA, SUITE 701 NEW YORK NY 10121-0701 USA, 10 August 2015 (2015-08-10), pages 259-268, XP058513929, DOI: 10.1145/2783258.2783311 ISBN: 978-1-4503-3540-9 * abstract * * page 259, paragraph 1 – page 261, paragraph 4 * * page 263, paragraph 5 – page 267, paragraph 7 * | 1-15 | INV. G06N20/00 G06N5/022 |
| A | NIKI KILBERTUS ET AL: "Avoiding Discrimination through Causal Reasoning", ARXIV.ORG, CORNELL UNIVERSITY LIBRARY, 201 OLIN LIBRARY CORNELL UNIVERSITY ITHACA, NY 14853, 8 June 2017 (2017-06-08), XP081306120, * the whole document * | 1-15 | TECHNICAL FIELDS SEARCHED (IPC) G06N |
| A | FAISAL KAMIRAN ET AL: "Classifying without discriminating", COMPUTER, CONTROL AND COMMUNICATION, 2009. IC4 2009. 2ND INTERNATIONAL CONFERENCE ON, IEEE, PISCATAWAY, NJ, USA, 17 February 2009 (2009-02-17), pages 1-6, XP031452853, ISBN: 978-1-4244-3313-1 * abstract * * page 2, paragraph II. – page 6, paragraph V. * | 1-15 | |

-/--

The present search report has been drawn up for all claims

| Place of search | Date of completion of the search | Examiner |
|---|---|---|
| The Hague | 10 May 2023 | Keresztury, Bence |

page 1 of 2

Europäisches
Patentamt

European
Patent Office

Office européen
des brevets

## EUROPEAN SEARCH REPORT

Application Number

EP 22 20 8762

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A,D | WO 2021/085188 A1 (SONY CORP [JP]) 6 May 2021 (2021-05-06) * figures 1-7,10 * * paragraph [0001] – paragraph [0175] * ----- | 1-15 | |

TECHNICAL FIELDS
SEARCHED (IPC)

The present search report has been drawn up for all claims

| Place of search | Date of completion of the search | Examiner |
|---|---|---|
| The Hague | 10 May 2023 | Keresztury, Bence |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

...........................................................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 22 20 8762

This annex lists the patent family members relating to the patent documents cited in the above-mentioned European search report.
The members are as contained in the European Patent Office EDP file on
The European Patent Office is in no way liable for these particulars which are merely given for the purpose of information.

10-05-2023

| Patent document cited in search report | | Publication date | Patent family member(s) | | Publication date |
|---|---|---|---|---|---|
| WO 2021085188 | A1 | 06-05-2021 | CN 114730388 | A | 08-07-2022 |
| | | | EP 4053758 | A1 | 07-09-2022 |
| | | | US 2022358313 | A1 | 10-11-2022 |
| | | | WO 2021085188 | A1 | 06-05-2021 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2021084609 A
- WO 2021085188 A
- WO 2021005891 A